# EUROPEAN PATENT SPECIFICATION

(11) **EP 4 509 658 B1**
(45) Date of publication and mention of the grant of the patent: **08.07.2026**
(21) Application number: 24191445.6
(22) Date of filing: 29.07.2024
(51) Int. Cl.: E02F 3/32, E02F 9/08, E02F 9/20

(54) **WORK MACHINE**
ARBEITSMASCHINE
MACHINE DE TRAVAIL

(30) Priority: 01.08.2023 JP 2023125591
(43) Date of publication of application: 19.02.2025
(73) Proprietor: Yanmar Holdings Co., Ltd., Osaka-shi, Osaka (JP)
(72) Inventor: NOMURA, Kotaro, Fukuoka (JP)
(74) Representative: Sekiguchi, Kazuya

(56) References cited:
- CN-A- 103 380 251
- CN-A- 106 103 850
- JP-A- 2021 080 704
- JP-A- 2021 080 708

## Description

### TECHNICAL FIELD

The present invention relates to a work machine.

### BACKGROUND ART

Conventionally, a turning work machine including a battery unit is known (see, for example, Patent Document 1). In the turning work machine disclosed in Patent Document 1, electrical components such as a junction box are disposed on an upper rear side of a battery unit mounted on a turning base. A device according to the prior art is disclosed in document CN103380251A.

### PRIOR ART DOCUMENT

### PATENT DOCUMENT

Patent Document 1: Japanese Unexamined Patent Application Publication No. 2021-80704

### SUMMARY OF INVENTION

### TECHNICAL PROBLEM

In the turning work machine as described above, the junction box is usually connected to the battery unit via a wiring member such as a cable. For example, in a case where a connection portion of the cable is provided on the front surface side of the battery unit, when the cable is passed above the battery unit, the connection portion can be connected to the junction box provided above the battery unit while suppressing an increase in the length of the cable.

However, for example, in a small-sized work machine or the like, a driver's seat may be disposed above the battery unit via a cover. In such a configuration, a space between the battery unit and the cover tends to be narrow. Therefore, it may be difficult to pass the cable through the space between the battery unit and the cover.

In view of the above, an object of the present invention is to provide a technique capable of appropriately disposing a wiring member in a work machine including a battery unit.

### SOLUTION TO PROBLEM

An exemplary work machine according to the present invention is a work machine including a turning body in front of which a work device is disposed, the work machine including: a turning frame constituting a bottom portion of the turning body; a battery unit disposed on the turning frame; a first connection portion that inputs electric power to the battery unit or outputs electric power of the battery unit; a second connection portion that is disposed above the battery unit and distributes electric power; and a wiring member that passes below the battery unit and connects the first connection portion to the second connection portion.

### ADVANTAGEOUS EFFECTS OF INVENTION

According to the exemplary present invention, it is possible to appropriately dispose the wiring member in the work machine including the battery unit.

### BRIEF DESCRIPTION OF DRAWINGS

FIG. 1 is a perspective view illustrating a schematic configuration of a work machine.
FIG. 2 is a perspective view illustrating a schematic configuration of the inside of a turning body.
FIG. 3 is a schematic perspective view of FIG. 2 from which some members are eliminated.
FIG. 4 is a perspective view illustrating a schematic configuration of a part of wiring and piping in the work machine.
FIG. 5 is a perspective view illustrating a schematic relationship between a piping member, and a first vertical plate and a second vertical plate.

### DESCRIPTION OF EMBODIMENTS

Hereinafter, an exemplary embodiment of the present invention will be explained in detail with reference to the drawings. Note that, in the drawings, the same or corresponding parts are denoted by the same reference numerals, and explanation thereof will not be repeated unless otherwise required.

### <1. Schematic Configuration of Work Machine>

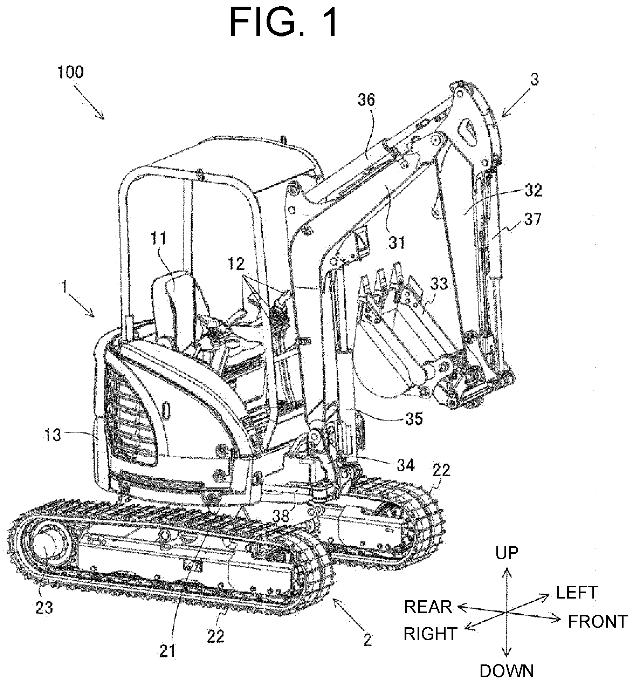

FIG. 1 is a perspective view illustrating a schematic configuration of a work machine 100 according to an embodiment of the present invention. Specifically, the work machine 100 is a hydraulic excavator. The work machine 100 may be, for example, a small-sized hydraulic excavator. The work machine according to the present invention is not limited to a hydraulic excavator. The present invention is widely applicable to a work machine (turning work machine) including a turning body.

As illustrated in FIG. 1, the work machine 100 includes a turning body 1, a traveling body 2, and a work device 3.

In the present specification, a front-and-rear direction is defined on the assumption that a side on which the work device 3 is located with respect to the turning body 1 is "front". Further, a gravity direction perpendicular to the front-and-rear direction is an up-and-down direction, an upstream side in the gravity direction is "up", and a downstream side in the gravity direction is "down". A direction perpendicular to the front-and-rear direction and the up-and-down direction is referred to as a left-and-right direction, and as viewed from the rear toward the front, a left side is referred to as "left" and a right side is referred to as "right". A plane parallel to the front-and-rear direction and the left-and-right direction is a horizontal plane, and a plane orthogonal to the horizontal plane is a vertical plane. Although the direction of the turning body 1 is not fixed because the turning body 1 turns around, the expression of the direction is used on the assumption that the turning body 1 is fixed in the direction illustrated in FIG. 1. In addition, the directions defined herein are merely names used for explanation, and are not intended to limit the actual positional relationship and directions.

The turning body 1 is provided in such a way as to be turnable about an axis extending in the up-and-down direction at a central portion thereof. In the present embodiment, the turning body 1 is turnably supported by the traveling body 2 disposed below the turning body 1.

The turning body 1 is driven to turn by a turning motor, which is not illustrated, constituted as a hydraulic motor. The turning body 1 is provided in such a way as to be capable of turning to the right and turning to the left. The work device 3 is disposed in front of the turning body 1. Namely, the work machine 100 includes the turning body 1 in front of which the work device 3 is disposed.

The turning body 1 is provided with a driver's seat 11 on which an operator who operates the work machine 100 sits. An operator sitting on the driver's seat 11 faces forward and operates various operation devices provided around the driver's seat 11. In the present embodiment, the operation device includes an operation lever 12. The driver's seat 11 is supported by a cover (not illustrated) that covers various members disposed inside the turning body 1 (an engine room). Various members disposed inside the turning body 1 will be described below. In addition, a counterweight 13 is disposed at a rear end portion of the turning body 1.

The traveling body 2 enables the work machine 100 to travel by itself. Specifically, the traveling body 2 includes a pair of crawlers 22 disposed on the left and right of a traveling body frame 21. Each of the crawlers 22 is driven by a traveling motor 23 constituted by a hydraulic motor. When the pair of left and right crawlers 22 is simultaneously driven in the same direction, the traveling body 2 travels straight forward or rearward. The forward or backward is determined by a rotational direction of the traveling motor 23. When the pair of left and right crawlers 22 is independently driven, the traveling body 2 turns left or turns right.

Note that although the traveling body 2 in the present embodiment is a crawler type, the traveling body is not limited to the crawler type and may be a wheel type or the like. Further, a blade for ground leveling work may be provided at a front portion or a rear portion of the traveling body 2.

The work device 3 includes a boom 31, an arm 32, and a bucket 33. The work device 3 performs excavation work of earth and sand or the like by moving the boom 31, the arm 32, and the bucket 33 simultaneously or independently. Note that the bucket 33 may be replaced with another work tool such as a breaker, which is utilized when a demolishing work is performed, for example.

The boom 31, one end portion of which is supported by a boom bracket 34, is rotatable in a vertical plane (rotatable upward and downward). The boom bracket 34 is supported by the turning body 1. The boom 31 is bent at an intermediate portion and has a V-shape in a side view. The boom 31 is rotated by expansion and contraction of a boom cylinder 35 whose one end is coupled to the boom bracket 34 and whose another end is coupled to an intermediate portion of the boom 31.

One end portion of the arm 32 is supported by another end portion of the boom 31 in such a way as to be rotatable in a vertical plane. The arm 32 is rotated by expansion and contraction of an arm cylinder 36 whose one end is coupled to an intermediate portion of the boom 31 and another end is coupled to one end portion of the arm 32. One end portion of the bucket 33 is supported by another end portion of the boom 32 in such a way as to be rotatable in a vertical plane. The bucket 33 is rotated by expansion and contraction of a bucket cylinder 37 whose one end is coupled to one end portion of the arm 32 and another end is coupled to the bucket 33. In FIG. 1, the boom 31, the arm 32, and the bucket 33 are each provided in such a way as to be rotatable about an axis (not illustrated) extending in the left-and-right direction.

Specifically, the boom bracket 34 is supported by the turning body 1 in such a way as to be rotatable in a horizontal plane (horizontally rotatable). In other words, the boom bracket 34 is rotatable about an axis (not illustrated) extending in the up-and-down direction. The boom bracket 34 is rotated counterclockwise or clockwise by expansion and contraction of a swing cylinder 38 whose one end is coupled to the turning body 1 and another end is coupled to the boom bracket 34. Namely, the action of the swing cylinder 38 allows the work device 3 to swing counterclockwise or clockwise.

The boom cylinder 35, the arm cylinder 36, the bucket cylinder 37, and the swing cylinder 38 are all hydraulic type cylinders, and are included in a hydraulic actuator of the work machine 100. The hydraulic actuator of the work machine 100 also includes the traveling motor 23 and a turning motor (not illustrated) described above. An operator sitting on the driver's seat 11 can perform work using the work device 3 by operating the operation lever 12 described above and thereby controlling a hydraulic actuator.

### <2. Configuration of Turning Body>

### [2-1. Overview of Inside of Turning Body]

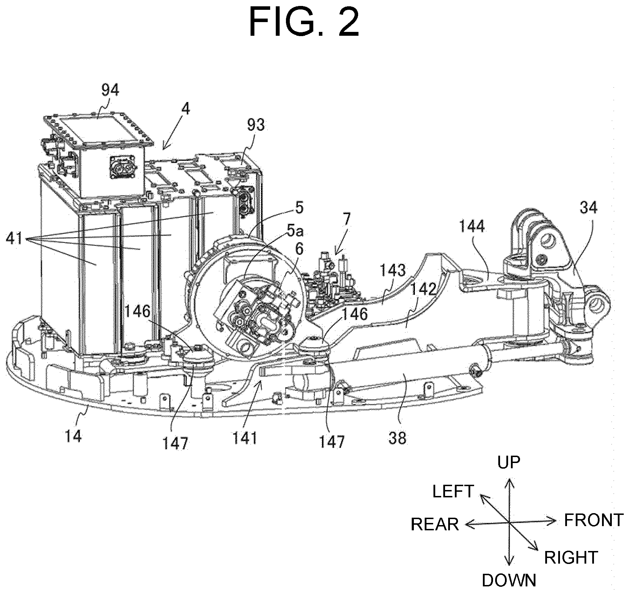

FIG. 2 is a perspective view illustrating a schematic configuration of the inside of the turning body 1. As illustrated in FIG. 2, the turning body 1 includes a turning frame 14 at a bottom portion thereof. In other words, the work machine 100 includes the turning frame 14 that constitutes the bottom portion of the turning body 1. The turning frame 14 is composed of a plate-like member. Various members are mounted on the turning frame 14.

As illustrated in FIG. 2, a battery unit 4, an electric motor 5, a hydraulic pump 6, and a control valve 7 are disposed on the turning frame 14. Namely, the work machine 100 includes a battery unit 4, an electric motor 5, a hydraulic pump 6, and a control valve 7. The work machine 100 includes the battery unit 4, the electric motor 5, the hydraulic pump 6, and the control valve 7, which are disposed on the turning frame 14.

In addition, the turning frame 14 is provided with a coupling portion 141 to which one end of the swing cylinder 38 described above can be coupled.

### (2-1-1. Turning Frame)

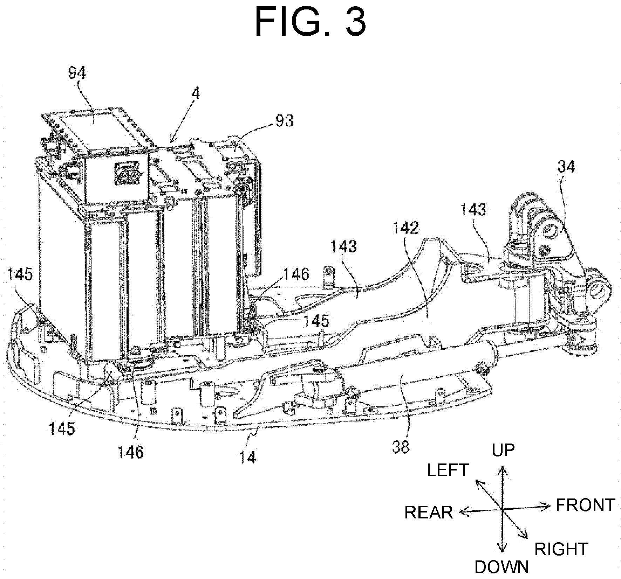

FIG. 3 is a schematic perspective view of FIG. 2 from which some members eliminated. Some of the members include the electric motor 5, the hydraulic pump 6, and the control valve 7. As illustrated in FIGS. 2 and 3, the turning frame 14 includes a first vertical plate 142 and a second vertical plate 143. Namely, the work machine 100 includes a first vertical plate 142 and a second vertical plate 143. By providing the first vertical plate 142 and the second vertical plate 143, the strength of the turning frame 14 can be enhanced.

The first vertical plate 142 and the second vertical plate 143 are provided in a plate shape, and are erected at a central portion in the left-and-right direction of an upper surface of the turning frame 14. The first vertical plate 142 and the second vertical plate 143 extend from a front side to a rear side on the turning frame 14, and are disposed at intervals in the left-and-right direction. Specifically, the first vertical plate 142 is disposed on the right side, and the second vertical plate 143 is disposed on the left side. However, this is merely an example, and the first vertical plate 142 may be on the left side and the second vertical plate 143 may be on the right side. The first vertical plate 142 and the second vertical plate 143 have an inclined structure in which the height in the up-and-down direction on the rear side is lower than that on the front side. The first vertical plate 142 and the second vertical plate 143 are the same member integrated with the turning frame 14.

A bracket support portion 144 that supports the boom bracket 34 in a horizontally rotatable manner is provided at a central portion in the left-and-right direction of a front end portion of the turning frame 14. Front end portions of the first vertical plate 142 and the second vertical plate 143 are fixed to the bracket support portion 144. Namely, the work machine 100 includes the boom bracket 34 (swing body) that is horizontally rotatably supported by the turning frame 14 in front of the first vertical plate 142 and the second vertical plate 143 and supports the work device 3.

### (2-1-2. Battery Unit)

The battery unit 4 includes at least one battery 41. The battery 41 is composed of, for example, a secondary battery such as a lithium ion battery. In the present embodiment, as illustrated in FIGS. 2 and 3, the battery unit 4 includes a plurality of batteries 41. The plurality of batteries 41 may be connected in series or in parallel. Further, for example, some of the plurality of batteries 41 may be connected in series, and some of the batteries 41 connected in series may be connected in parallel. In the present embodiment, the number of batteries 41 is four. Two each of the four batteries 41 are connected in series, and the two batteries 41 connected in series are connected in parallel.

The work machine 100 includes a power feeder (not illustrated) that converts electric power supplied from an AC power supply (such as a commercial power supply) outside the work machine 100 from AC power to DC power. The battery unit 4 can be charged by being supplied with electric power from the power feeder. Further, the battery unit 4 can supply electric power to various loads included in the work machine 100, such as the electric motor 5.

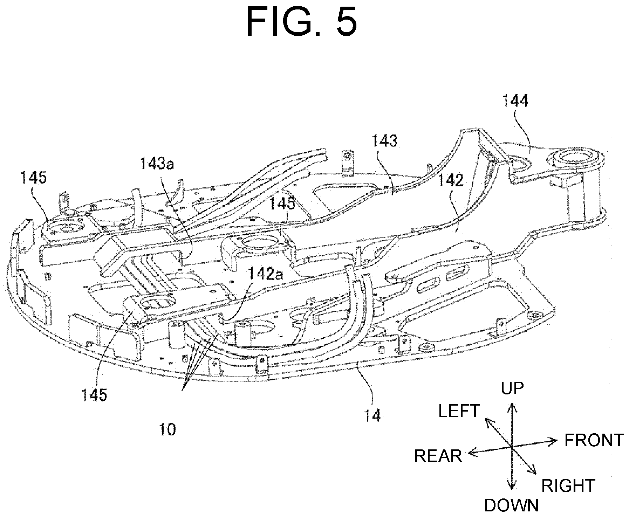

As illustrated in FIGS. 2 and 3, a battery unit support base 145 is provided on the upper surface of the turning frame 14 (see also FIG. 5). The battery unit support base 145 is the same member integrated with the turning frame 14. In the present embodiment, the battery unit support base 145 is divided into a plurality of parts, but may be formed of a single part. The battery unit 4 is supported by the battery unit support base 145 via a vibration isolating member 146. The vibration isolating member 146 is constituted by, for example, a rubber member. The battery unit 4 supported by the battery unit support base 145 is disposed at the center portion of the turning frame 14 in the left-and-right direction and closer to the rear side of the turning frame 14 in the front-and-rear direction.

The driver's seat 11 and the battery unit 4 at least partially overlap each other in a plan view. A cover, which is not illustrated, is disposed between the driver's seat 11 and the battery unit 4 in the up-and-down direction.

### (2-1-3. Electric Motor)

The electric motor 5 uses electric power of the battery unit 4 as a power supply. Namely, the electric motor 5 is driven by the electric power supplied from the battery unit 4. In the present embodiment, the electric motor 5 is a three phase AC motor whose rotational speed is determined by a rotating magnetic field. Specifically, electric power is supplied from the battery unit 4 to an inverter device, which is not illustrated. The inverter device converts DC power supplied from the battery unit 4 into AC power, and supplies the AC power to the electric motor 5.

As illustrated in FIG. 2, a motor support base 147 is provided on the upper surface of the turning frame 14.

In the present embodiment, the motor support base 147 is divided into a plurality of parts, but may be formed of a single part. The electric motor 5 is supported by the motor support base 147. The motor support base 147 is supported by the turning frame 14 via a vibration isolating member 146. The electric motor 5 supported by the motor support base 147 is disposed on one side (the right side in the present embodiment) of the battery unit 4 in the left-and-right direction and in a central portion of the turning frame 14 in the front-and-rear direction.

### (2-1-4. Hydraulic Pump)

The hydraulic pump 6 is driven by the electric motor 5. The hydraulic pump 6 driven by the electric motor 5 pressure-feeds hydraulic oil to the above-described hydraulic actuators (hydraulic cylinders 35 to 38, a hydraulic motor 23, and the like).

Specifically, the hydraulic pump 6 is disposed adjacent to the right of the electric motor 5. The hydraulic pump 6 is coupled to a coupling body 5a provided at the right end of the electric motor 5. In detail, the motor support base 147 supports the coupling body 5a. The hydraulic pump 6 is disposed on an outer side of the machine body on the side opposite to the second vertical plate 143 side (the right side in the present embodiment) with respect to the first vertical plate 142. It is possible to improve the balance of the work machine 100 by disposing a member lighter than a heavy object such as the battery unit 4 on the outer side of the machine body.

### (2-1-5. Control valve)

The control valve 7 is interposed between the hydraulic pump 6 and the hydraulic actuators (the hydraulic cylinders 35 to 38, the hydraulic motor 23, and the like). The control valve 7 is a control valve that is operated by the operation lever 12 and controls a flow of the hydraulic oil supplied from the hydraulic pump 6 to the hydraulic actuator. Specifically, the control valve 7 controls a flow direction and a flow rate of the hydraulic oil.

More specifically, the control valve 7 is an assembly of a plurality of hydraulic switching valves. The control valve 7 switches the supply and discharge of the hydraulic oil to and from the hydraulic cylinders 35 to 38, the hydraulic motor 23, and the like which are included in the hydraulic actuators, thereby controlling the actions thereof. The control valve 7 is disposed on the outer side of the machine body on the side opposite to the first vertical plate 142 side (the left side in the present embodiment) with respect to the second vertical plate 143. It is possible to improve the balance of the work machine 100 by disposing a member lighter than a heavy object such as the battery unit 4 on the outer side of the machine body.

### [2-2. Wiring and Piping]

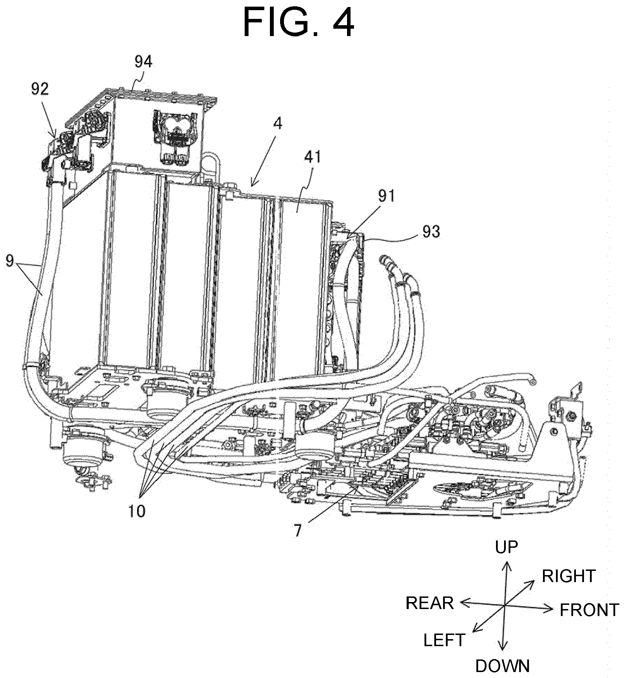

Next, wiring and piping in the work machine 100 will be explained. FIG. 4 is a perspective view illustrating a schematic configuration of a part of wiring and piping in the work machine 100. FIG. 4 is a view of the inside of the turning body 1 with the turning frame 14 removed, as viewed obliquely from below. Hereinafter, wiring and piping will be explained mainly with reference to FIG. 4.

### (2-2-1. Wiring)

As illustrated in FIG. 4, the work machine 100 includes a wiring member 9, a first connection portion 91, and a second connection portion 92.

The wiring member 9 is utilized for inputting electric power to the battery unit 4 and outputting electric power from the battery unit 4. The wiring member 9 widely includes electric wires such as a cable and a harness. In the present embodiment, the wiring member 9 is a cable, more specifically, a high-voltage cable.

The first connection portion 91 is a connection portion that inputs electric power to the battery unit 4 or outputs electric power of the battery unit 4. In the present embodiment, the first connection portion 91 is included in a box-shaped first electrical device 93 (see also FIG. 2) disposed adjacent to the battery unit 4. However, such a configuration is merely an example, and for example, the first connection portion 91 may be provided in the battery unit 4 itself. Namely, the first electrical device 93 is not an essential component. Since the first electrical device 93 including the first connection portion 91 is provided separately from the battery unit 4, for example, the battery unit 4 including the plurality of batteries 41 can be easily utilized.

Specifically, the first electrical device 93 is a power distribution unit (PDU). The PDU 93 has a function of collectively outputting and inputting electric power to and from the plurality of batteries 41 included in the battery unit 4. The PDU 93 controls an internal battery relay and then controls input and output of electric power in the battery unit 4. In the present embodiment, the PDU 93 is disposed in front of and adjacent to the battery unit 4. The first connection portion 91 is disposed on an upper portion of the right-side surface of the PDU 93.

The second connection portion 92 is a connection portion that is disposed above the battery unit 4 and distributes electric power. The second connection portion 92 distributes electric power consumed in the work machine 100 and electric power charged by the battery unit 4. The second connection portion 92 supplies electric power being output from the battery unit 4 to, for example, an inverter device that drives the electric motor 5, a converter device that drops a voltage, or the like. Further, the second connection portion 92 supplies electric power being output from a power feeder (not illustrated) to the battery unit 4, a converter device, and the like.

In the present embodiment, the second connection portion 92 is included in a box-shaped second electrical device 94 disposed above the battery unit 4. However, such a configuration is merely an example, and the second connection portion 92 may not be a box-shaped electrical device, and may be configured by, for example, at least one relay disposed above the battery unit 4. Namely, the second electrical device 94 is not an essential component. By providing the box-shaped second electrical device 94, for example, electric wires can be put together to improve appearance, or the electric wires can be protected. Specifically, the second electrical device 94 is a junction box. The junction box 94 is disposed above a rear portion of the battery unit 4. The second connection portion 92 is disposed on the rear surface of the junction box 94.

The wiring member 9 passes below the battery unit 4 and connects the first connection portion 91 and the second connection portion 92. The wiring member 9 electrically connects the first connection portion 91 and the second connection portion 92. As described above, the battery unit 4 is supported by using the battery unit support base 145 provided on the upper surface of the turning frame 14. Therefore, there is originally a gap between the bottom surface of the battery unit 4 and the upper surface of the turning frame 14. In a case where the wiring member 9 is configured to pass below the battery unit 4, the wiring member 9 can be disposed by effectively utilizing the gap.

In the present embodiment, the junction box 94 is located behind the driver's seat 11. Therefore, even when the up-and-down direction height of the battery unit 4 is increased, the junction box 94 does not interfere with the driver's seat 11. Further, according to the configuration of the present embodiment, a space for wiring the wiring member 9 above the battery unit 4 is not necessarily required. For this reason, the height of the battery unit 4 disposed below the driver's seat 11 can be increased within a range in which the battery unit 4 does not interfere with the driver's seat 11 (specifically, a cover supporting the driver's seat 11). Namely, the battery 41 having a capacity as large as possible can be disposed in the engine room.

In the present embodiment, the first connection portion 91 is disposed on the front surface side of the battery unit 4, and the second connection portion 92 is disposed on the rear surface side of the battery unit 4. However, this is merely an example, and the first connection portion 91 and the second connection portion 92 may be provided on a side surface side different from the above-described side surface side of the battery unit 4. Namely, the first connection portion 91 may be provided on one side surface side of the battery unit 4, and the second connection portion 92 may be provided on another side surface side different from the one side surface side of the battery unit 4. The one side surface and another side surface may be surfaces opposed to each other or surfaces not opposed to each other. With the configuration in which the first connection portion 91 and the second connection portion 92 are provided on the side surface side of the battery unit 4, the wiring member 9 can be configured in such a way as not to cross the upper surface of the battery unit 4 at all.

### (2-2-2. Piping)

As illustrated in FIG. 4, the work machine 100 includes a piping member 10. The piping member 10 is utilized for pressure-feeding the hydraulic oil discharged from the hydraulic pump 6 to the control valve 7. Namely, the control valve 7 is connected to the hydraulic pump 6 via the piping member 10. The piping member 10 is preferably a flexible member, and is a hydraulic hose in the present embodiment. Since the control valve 7 is an assembly of a plurality of hydraulic switching valves, the number of piping members 10 connecting the hydraulic pump 6 to the control valve 7 is plural.

The piping member 10 intersects with the wiring member 9. With such a configuration, a part of the piping member 10 and a part of the wiring member 9 can be collectively disposed in the same space, and the space inside the turning body 1 (engine room) can be efficiently utilized.

Specifically, the piping member 10 preferably passes under the wiring member 9. In the present embodiment, the piping member 10 is located below the wiring member 9 at a position where the piping member 10 and the wiring member 9 intersect with each other. With this configuration, even when oil drips from the piping member 10, it is possible to avoid a situation in which the dripping oil falls on the wiring member 9.

More specifically, in the present embodiment, as a preferable mode, the wiring member 9 passes between the piping member 10 and the battery unit 4 (between the up and down directions). According to this configuration, the wiring member 9 and the piping member 10 intersect with each other in the space below the battery unit 4. Namely, the wiring member 9 and the piping member 10 can be disposed in the turning body 1 by effectively utilizing the space below the battery unit 4.

FIG. 5 is a perspective view illustrating a schematic relationship between the piping member 10, and the first vertical plate 142 and the second vertical plate 143. As illustrated in FIG. 5, the first vertical plate 142 and the second vertical plate 143 respectively have notches 142a and 143a, which are recessed upward from the lower end, in the rear portion. By providing the notches 142a and 143a, the piping member 10 is disposed in such a way as to penetrate through each of the first vertical plate 142 and the second vertical plate 143.

The two notches 142a and 143a overlap each other in a side view from the left-and-right direction. Namely, when the piping member 10 is passed through the two notches 142a and 143a, it is not necessary to forcibly bend the piping member 10. Further, in the present embodiment, elements (the battery unit support base 145 and the like) constituting the turning frame 14 are adjacently disposed on the left side of the first vertical plate 142 and the second vertical plate 143. However, since these are formed in an inverted U-shape or have a notch, the piping member 10 can be disposed in such a way as to penetrate these.

In the present embodiment, the notches 142a and 143a are provided in the first vertical plate 142 and the second vertical plate 143, respectively, but this is merely an example. Each of the first vertical plate 142 and the second vertical plate 143 may be provided with a through-hole penetrating in the left-and-right direction for allowing the piping member 10 to pass therethrough. Namely, it is preferable that each of the first vertical plate 142 and the second vertical plate 143 has a notch or a through-hole through which the piping member 10 passes. With such a configuration, it is not necessary to dispose the piping member 10 by avoiding the first vertical plate 142 and the second vertical plate 143, and the piping member 10 can be efficiently disposed. Further, if the piping member 10 passes above the first vertical plate 142 and the second vertical plate 143 while avoiding the plates, there is a possibility that the battery unit 4 needs to be reduced in size. However, according to the configuration of the present embodiment, such a situation can be avoided.

One of the first vertical plate 142 and the second vertical plate 143 may be provided with a notch for allowing the piping member 10 to pass therethrough, and another may be provided with a through-hole for allowing the piping member 10 to pass therethrough.

### REFERENCE SIGNS LIST

1 TURNING BODY
3 WORK DEVICE
4 BATTERY UNIT
5 ELECTRIC MOTOR
6 HYDRAULIC PUMP
7 CONTROL VALVE
9 WIRING MEMBER
10 PIPING MEMBER
14 TURNING FRAME
91 FIRST CONNECTION PORTION
92 SECOND CONNECTION PORTION
93 FIRST ELECTRICAL DEVICE
94 SECOND ELECTRICAL DEVICE
100 WORK MACHINE
142 FIRST VERTICAL PLATE
142a NOTCH
143 SECOND VERTICAL PLATE
143a NOTCH

## Claims

1. A work machine (100) including a turning body (1) in front of which a work device (3) is disposed, the work machine (100) comprising:
a turning frame (14) constituting a bottom portion of the turning body (1);
a battery unit (4) disposed on the turning frame (14);
a first connection portion (91) provided separately from the battery unit (4);
a second connection portion (92) provided on a side surface of the battery unit (4); and
a wiring member (9) that passes below the battery unit (4) and connects the first connection portion (91) to the second connection portion (92).

2. The work machine (100) according to claim 1, wherein
the first connection portion (91) is configured to input electric power to the battery unit (4) or output electric power of the battery unit (4).

3. The work machine (100) according to claim 1 or 2, wherein the second connection portion (92) is configured to distribute electric power.

4. The work machine (100) according to any one of claims 1 to 3, wherein
the first connection portion (91) is provided on one side surface side of the battery unit (4), and
the second connection portion (92) is provided on another side surface side different from the one side surface side of the battery unit (4).

5. The work machine (100) according to any one of claims 1 to 4, wherein:
the first connection portion (91) is included in a box-shaped first electrical device (93) disposed adjacent to the battery unit (4).

6. The work machine (100) according to any one of claims 1 to 5, wherein the second connection portion (92) is included in a box-shaped second electrical device (94) disposed above the battery unit (4).

7. The work machine (100) according to claim 1, further comprising:
a hydraulic pump (6) that is disposed on the turning frame (14) and driven by an electric motor (5) using electric power of the battery unit (4) as a power supply; and
a control valve (7) that is disposed on the turning frame (14) and connected to the hydraulic pump (6) via a piping member (10),
wherein the piping member (10) intersects with the wiring member(9).

8. The work machine according to claim 7, wherein the piping member (10) passes below the wiring member (9).

9. The work machine according to claim 8, wherein the wiring member (9) passes between the piping member (10) and the battery unit (4).

## Patentansprüche

1. Arbeitsmaschine (100), die einen Drehkörper (1) beinhaltet, vor dem eine Arbeitsvorrichtung (3) angeordnet ist, die Arbeitsmaschine (100) umfassend:
einen Drehrahmen (14), der einen Bodenteil des Drehkörpers (1) darstellt;
eine Batterieeinheit (4), die auf dem Drehrahmen (14) angeordnet ist;
einen ersten Verbindungsteil (91), der getrennt von der Batterieeinheit (4) bereitgestellt ist;
einen zweiten Verbindungsteil (92), der auf einer Seitenfläche der Batterieeinheit (4) bereitgestellt ist; und
ein Verdrahtungselement (9), das unter der Batterieeinheit (4) verläuft und den ersten Verbindungsteil (91) mit dem zweiten Verbindungsteil (92) verbindet.

2. Arbeitsmaschine (100) nach Anspruch 1, wobei
der erste Verbindungsteil (91) dazu konfiguriert ist, elektrische Leistung in die Batterieeinheit (4) einzugeben oder elektrische Leistung von der Batterieeinheit (4) auszugeben.

3. Arbeitsmaschine (100) nach Anspruch 1 oder 2, wobei der zweite Verbindungsteil (92) dazu konfiguriert ist, elektrische Leistung zu verteilen.

4. Arbeitsmaschine (100) nach einem der Ansprüche 1 bis 3, wobei
der erste Verbindungsteil (91) auf einer Seitenflächenseite der Batterieeinheit (4) bereitgestellt ist, und
der zweite Verbindungsteil (92) auf einer anderen Seitenflächenseite bereitgestellt ist, die sich von der einen Seitenflächenseite der Batterieeinheit (4) unterscheidet.

5. Arbeitsmaschine (100) nach einem der Ansprüche 1 bis 4, wobei:
der erste Verbindungsteil (91) in einer kastenförmigen ersten elektrischen Vorrichtung (93) beinhaltet ist, die angrenzend an die Batterieeinheit (4) angeordnet ist.

6. Arbeitsmaschine (100) nach einem der Ansprüche 1 bis 5, wobei der zweite Verbindungsteil (92) in einer kastenförmigen zweiten elektrischen Vorrichtung (94) beinhaltet ist, die oberhalb der Batterieeinheit (4) angeordnet ist.

7. Arbeitsmaschine (100) nach Anspruch 1, ferner umfassend:
eine Hydraulikpumpe (6), die auf dem Drehrahmen (14) angeordnet ist und von einem Elektromotor (5) unter Verwendung von elektrischer Leistung der Batterieeinheit (4) als Leistungszufuhr angetrieben wird; und
ein Steuerventil (7), das auf dem Drehrahmen (14) angeordnet und mit der Hydraulikpumpe (6) über ein Leitungselement (10) verbunden ist,
wobei das Leitungselement (10) das Verdrahtungselement (9) schneidet.

8. Arbeitsmaschine nach Anspruch 7, wobei das Leitungselement (10) unterhalb des Verdrahtungselements (9) verläuft.

9. Arbeitsmaschine nach Anspruch 8, wobei das Verdrahtungselement (9) zwischen dem Leitungselement (10) und der Batterieeinheit (4) verläuft.

## Revendications

1. Machine de travail (100) incluant un corps rotatif (1) devant lequel est disposé un dispositif de travail (3), la machine de travail (100) comprenant :
un cadre rotatif (14) constituant une partie inférieure du corps rotatif (1) ;
une unité de batterie (4) disposée sur le cadre rotatif (14) ;
une première partie de raccordement (91) prévue séparément de l'unité de batterie (4) ;
une deuxième partie de raccordement (92) prévue sur une surface latérale de l'unité de batterie (4) ; et
un élément de câblage (9) qui passe sous l'unité de batterie (4) et raccorde la première partie de raccordement (91) à la deuxième partie de raccordement (92).

2. Machine de travail (100) selon la revendication 1, dans laquelle
la première partie de raccordement (91) est configurée pour injecter de l'énergie électrique dans l'unité de batterie (4) ou extraire de l'énergie électrique de l'unité de batterie (4).

3. Machine de travail (100) selon la revendication 1 ou 2, dans laquelle la deuxième partie de raccordement (92) est configurée pour distribuer de l'énergie électrique.

4. Machine de travail (100) selon l'une quelconque des revendications 1 à 3, dans laquelle
la première partie de raccordement (91) est prévue d'un côté de la surface latérale de l'unité de batterie (4), et
la deuxième partie de raccordement (92) est prévue d'un coté de la surface latérale différent du premier côté de la surface latérale de l'unité de batterie (4).

5. Machine de travail (100) selon l'une quelconque des revendications 1 à 4, dans laquelle :
la première partie de raccordement (91) est incluse dans un premier dispositif électrique (93) en forme de boîtier, disposé adjacent à l'unité de batterie (4).

6. Machine de travail (100) selon l'une quelconque des revendications 1 à 5, dans laquelle la deuxième partie de raccordement (92) est incluse dans un deuxième dispositif électrique (94) en forme de boîtier disposé au-dessus de l'unité de batterie (4).

7. Machine de travail (100) selon la revendication 1, comprenant en outre :
une pompe hydraulique (6) qui est disposée sur le cadre rotatif (14) et entraînée par un moteur électrique (5) utilisant l'énergie électrique de l'unité de batterie (4) comme alimentation en énergie ; et
une vanne de régulation (7) qui est disposée sur le cadre rotatif (14) et raccordée à la pompe hydraulique (6) via un élément de tuyauterie (10),
dans laquelle l'élément de tuyauterie (10) intersecte l'élément de câblage (9).

8. Machine de travail selon la revendication 7, dans laquelle l'élément de tuyauterie (10) passe sous l'élément de câblage (9).

9. Machine de travail selon la revendication 8, dans laquelle l'élément de câblage (9) passe entre l'élément de tuyauterie (10) et l'unité de batterie (4).
